# EUROPEAN PATENT SPECIFICATION

(11) **EP 2 842 676 B1**
(45) Date of publication and mention of the grant of the patent: **08.11.2017**
(21) Application number: 13182653.9
(22) Date of filing: 02.09.2013
(51) Int. Cl.: B23D 57/00, B28D 5/04

(54) **Wire saw device**
Drahtsägevorrichtung
Dispositif de scie à fil

(43) Date of publication of application: 04.03.2015
(73) Proprietor: Toyo Advanced Technologies Co., Ltd., Minami-ku Hiroshima, 734-8501 (JP)
(72) Inventor: Chinoune, Youcef, 01170 Segny (FR); Bornet, Frederic, 1196 Gland (CH); Soubielle, Sebastien, 1032 Romanel-sur-Lausanne (CH); Speyrer, John, 1029 Villars-Ste.-Croix (CH)
(74) Representative: advotec.

(56) References cited:
- EP-A1- 0 827 822
- EP-A1- 1 685 934
- WO-A1-91/04839
- DE-A1-102011 112 270
- JP-A- H02 232 156

## Description

### TECHNICAL FIELD OF THE INVENTION

Embodiments of the present disclosure relate to a wire saw device for cutting semiconductor material according to the preamble of claim 1, in particular to a tension modifier for converting and adjusting a wire tension for a wire saw device for cutting semiconductor material.

### BACKGROUND OF THE INVENTION

Such a wire saw device is known from JP402232156A1. Wire saws are used for cutting blocks or bricks, thin slices, e.g., semiconductor wafers, from a piece of hard material such as silicon. In such devices, a wire is fed from a spool and is both guided and tensioned, inter alias, by wire guides. The wire that is used for sawing is provided with an abrasive material. As one option, the abrasive material can be provided as slurry. This may be done shortly before the wire touches the material to be cut. Thereby, the abrasive is carried to the cutting position by the wire for cutting the material. As another option, the abrasive can be provided on the wire with a coating, e.g. as in the case of a so-called "diamond wire" which is a wire coated with diamond particles. For example, diamond particles can be provided on a metal wire with a coating, wherein the diamond particles are imbedded in the coating of the wire. Thereby, the abrasive is firmly connected with the wire.

The wire is guided and the tension of the wire is maintained, inter alias, by wire guides. These wire guides are covered with a layer of synthetic resin and are scored with a plurality of parallel grooves having very precise geometry and size. The wire is wound around the wire guides while being guided in the parallel arranged grooves (which is sometimes incorrectly referred to as "spirally" in the literature), thereby forming a web or wire web.

During the sawing process, the wire is moved with considerable speed. The web generates a force opposite to the advance of a support beam or a support holding the piece to be sawed. During sawing, the piece to be sawed is moved through the wire web wherein the speed of this movement determines the cutting speed and/or the effective cutting area that can be sawed within a given amount of time.

For the cutting process the wire needs to have a certain tension in order to ensure sufficient throughput, precision and the like. The maximum wire tension for moving the piece through the web is limited by several factors, such as wire speed, hardness of the material to be sawed, disturbing influences and desired precision. Some processes during wire sawing do not require a high wire tension. These processes are, for example, processes needed before or after the actual cutting takes place. Such a process may include preparing wire spools which hold the wire for feeding the wire to the cutting area or for taking up the used wire from the cutting area.

It is of interest in the field that the sawing throughput, the sawing speed and the sawing quality is, at least, kept constant while costs are lowered. The situation as laid out led to the subject-matter disclosed herein that allows a cost reduction of the overall sawing process.

### SUMMARY OF THE INVENTION

In view of the above, the present disclosure provides a wire saw device that overcomes at least some of the drawbacks in the art. This object is achieved at least to some extent with a wire saw device for cutting semiconductor material according to the independent wire saw device claim.

According to aspects, a wire saw device for cutting semiconductor material is provided. The wire saw device includes a tension modifier adapted to convert a first wire tension into a second wire tension. The tension modifier includes a first guide roller including an axis of rotation and a plurality of grooves being formed in an outer circumferential surface of the first guide roller and a second guide roller including a plurality of grooves being formed in an outer circumferential surface of the second guide roller. The first guide roller and the second guide roller are spaced apart from each other at a fixed distance.

According to the invention, the second guide roller is pivotable around the axis of rotation of the first guide roller. In other embodiments, the relative position of the first guide roller to the second guide roller is constant.

According to some embodiments, at least one of the first guide roller and the second guide roller are provided with a conical shape. In particular, both the first guide roller and the second guide roller may be provided with a conical shape.

Further aspects, advantages, and features of the present disclosure are apparent from the dependent claims, the description, and the accompanying drawings.

### BRIEF DESCRIPTION OF THE DRAWINGS

So that the manner in which the above recited features of the present invention can be understood in detail, a more particular description of the invention, briefly summarized above, may be had by reference to embodiments. The accompanying drawings relate to embodiments of the disclosure and are described in the following: embodiments are depicted in the drawings and are detailed in the description which follows. In the drawings:
Figs. 1a and 1b show schematic perspective side views of a wire saw device according to embodiments described herein.
Fig. 2 shows a schematic perspective top view of a wire saw device according to embodiments described herein.
Fig. 3 shows a schematic view of an excerpt of a wire saw device according to embodiments described herein.
Fig. 4 shows a perspective front side view of an excerpt of a wire saw device according to embodiments described herein.
Fig. 5 shows a schematic side view of an excerpt of a wire saw device according to embodiments described herein.
Fig. 6 shows a schematic side view of an excerpt of a wire saw device including a tension modifier according to embodiments described herein.
Fig. 7 shows a schematic side view of an exemplary guide roller of a tension modifier according to embodiments described herein.

### DETAILED DESCRIPTION OF EMBODIMENTS

Reference will now be made in detail to the various embodiments of the invention, one or more examples of which are illustrated in the figures. Within the following description of the drawings, the same reference numbers refer to same components. In the present disclosure, only the differences with respect to individual embodiments are described.

In the following description, a "wire saw" or a "wire saw device" may be understood as a device for cutting semiconductor material, such as a cropper, a squarer, or a wafer cutting wire saw.

The term "tension modifier" is defined as an arrangement which is adapted for converting a wire tension in a wire saw device and for adjusting the wire tension. In other words, the tension modifier as understood herein is adapted to convert the wire tension and, at the same time, to adjust the wire tension the meaning of which will be explained in the following in more detail.

In the present disclosure, the term "to convert" shall be understood as an action for converting a wire tension for a wire saw device for cutting semiconductor material, i.e. to increase or to decrease the wire tension across orders of magnitude. For instance, tension conversion can be done from a tension such as below 10 N or even 8 N, to a tension of more than 10N. For instance, the tension may be converted from a tension between 2 and 8 N to a tension of between 10 and 20 N, such as 15 N, or to a tension of between 22 N and 32 N, such as 28 N.

In operation, the tension modifier may particularly convert the tension always in the same direction. For instance, the wire tension of the wire entering the tension modifier may be lower or higher than the wire tension of the wire exiting the tension modifier by orders of magnitude.

According to aspects, the wire tension of a wire which is guided in the grooves of the first guide roller and the second guide roller of the tension modifier is progressively increased or reduced with each subsequent groove winding that the wire passes. Typically, the tension modifier is operated such that this increase or decrease of the wire tension is performed without generating friction between the wire and the grooves.

The tension modifier may convert the wire tension of the wire on the conventional feed spool (as explained in more detail below) into a wire tension which is necessary for the actual cutting in the cutting zone and/or may convert the wire tension in the cutting zone into a wire tension which is desired for winding up the used wire on the take-up spool. As a result, the wire on the spools, e.g. the feed spool and the take-up spool, may be unwound/wound up under a lower tension than the tension necessary to cut the semiconductor material.

In addition, the tension modifier according to the present disclosure is adapted to adjust a wire tension. Adjusting a wire tension may be defined as adapting the wire tension by small magnitudes in order to keep the tension constant. The adjusting action of the tension modifier is typically done actively by one or more actuators. This will be explained in more detail below. In some embodiments, however, the adjusting action may be done reactively.

An active adjusting action may be induced by a control device which controls one or more actuators included in the tension modifier according to a measured wire tension.

According to aspects of the present disclosure, the tension modifier, in embodiments wherein the second guide roller is pivotable around the axis of rotation of the first guide roller, may be adapted to keep the desired wire tension for the actual cutting action or the winding-up process of the wire constant. The tension modifier is particularly adapted to compensate tension fluctuations of the wire tension. Such tension fluctuations may, for example, occur due to perturbations in the cutting process, due to the inertia of rotating elements, such as wire guides, in particular in case of a back and forth movement of the wire saw device. Such perturbations may also occur due to conversion of the wire tension, due to oscillations in the wire, or the like.

The tension modifier is a part of a wire saw device.

In the present disclosure the process of sawing corresponds to the process of cutting. Hence, the verb "to saw" with all adequate grammatical conjugations is used as having the same meaning as the verb "to cut" with all adequate grammatical conjugations.

In the present disclosure, the term "cutting direction" is defined as the direction in which the cut advances during the cutting process. In the present disclosure, the cutting direction is described in a vertical direction.

In the present disclosure, the methods of operating a wire saw can be conducted by means of computer programs, software, computer software products and the interrelated controllers, which can in the present disclosure have a CPU, a memory, a user interface, and input and output means being in communication with the corresponding components of the wire saw. These components can be one or more of the components: motors, wire break detection units, wire tracking devices, and the like, which will be described in more detail below.

The wire saw device according to the present disclosure includes at least one wire guide device for transporting and guiding the wire in a wire moving direction. Several wire guides may form the wire guide device. The wire provided forms a wire web in particular in the working area of the wire saw. Thereby, the term "wire web" typically relates to the web formed by the wire between at least two wire guides. The wire guides may be rotated by drives that cause the entire wire web to move at a relatively high speed of, for instance, 5 to 20 m/s. It should be understood that a wire web may contain more than one working area which is defined as an area in which a sawing process is performed. Thus, according to embodiments described herein, a wire web can have multiple working areas that are formed by one or several wires.

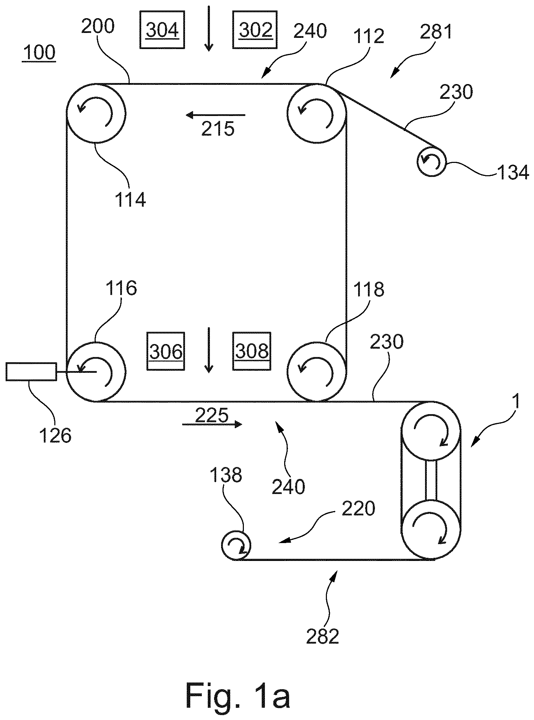

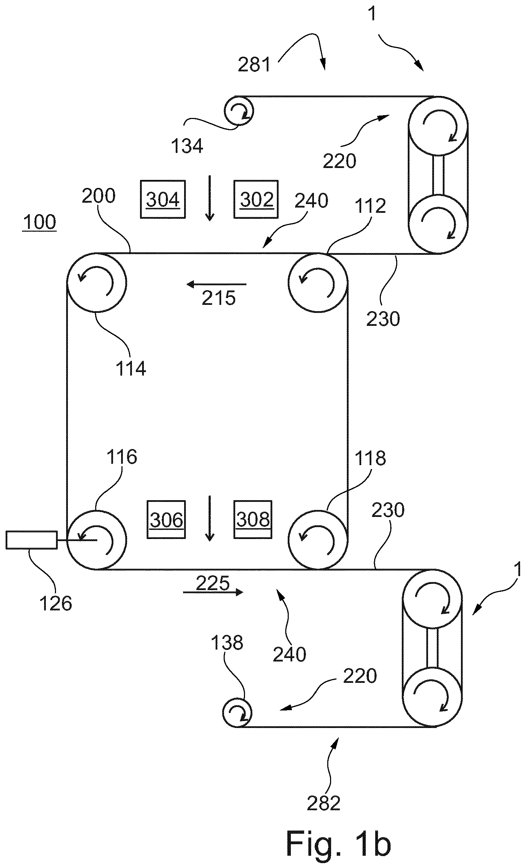

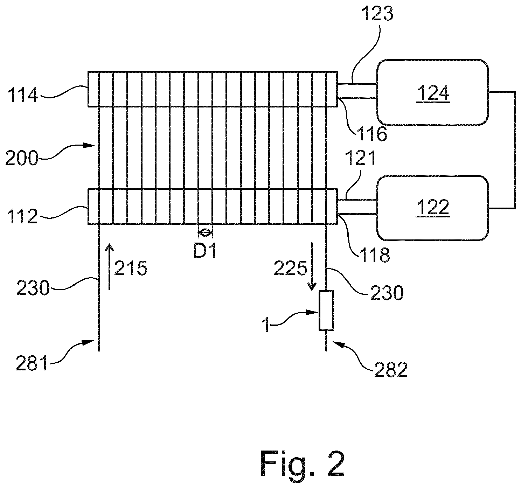

For instance, as will be illustrated in more detail below with respect to the embodiments illustrated in Figs. 1a, 1b and 2, the wire saw may include two wire webs, for instance, including two or four working areas. In this case, sawing is performed by pushing an ingot through the wire web defining the working area. It is possible that sawing is undertaken at the same time at multiple webs. The wire saw may furthermore include another two wire webs. According to embodiments, these webs are used for transporting the wire between the two or four working areas.

For modern wire saws like croppers, squarers, or multi-wire saws, there is the desire to cut the hard material such as semiconductor material, for example, silicon, quartz, or the like at high speed. The wire speed, that is the speed of the wire moving through the wire saw can be, for example, 10 m/s or even higher. In the present disclosure, the wire speed can be in a range of 10 to 25 m/s. However, higher wire speeds, such as of up to 30 m/s can also be desirable. According to embodiments, the movement of the wire is only unidirectional, i.e. always in the forward direction. According to other embodiments, the movement may include a movement in the backward direction, in particular, the movement can be a back-and-forth movement of the wire in which the movement direction of the wire may be changed repeatedly.

In embodiments, which can be combined with other embodiments described herein, the wires may have different diameters depending on the type of device. In embodiments pertaining to a squarer, the wire diameter may be from about 250 µm to about 450 µm, e.g., 300 µm to 350 µm. In embodiments pertaining to a wafer cutting wire saw, the wire diameter may be from 60 µm to 150 µm, optionally from 80 µm to 120 µm.

By using diamond wire, the throughput may be increased by a factor of 2 or even more in comparison to conventional steel wire. The speed with which the material to be sawed is moved relatively to the moving wire may be referred to as the material feed rate. The material feed rate in the embodiments described herein may be in the range of 2 µm/s to 15 µm/s, optionally about 6 µm/s to 10 µm/s for a wafer cutting wire saw, respectively from 20 µm/s to 40 µm/s, optionally from 28 µm/s to 36 µm/s for embodiments pertaining to a squarer.

According to embodiments described herein, a multi-wire saw is used. A multi-wire saw allows high productivity and high quality slicing of silicon ingots into wafers for the semiconductor and photovoltaic industries. A multi-wire saw may include one or several high-strength steel wires that may be moved uni-directionally (i.e., only in the forward direction) or bi-directionally (i.e., backwards and forwards) to perform the cutting action. The wire may be provided with diamonds on its surface. Not limited thereto, but in particular in the case of a multi-wire saw, four tension modifiers as described may be provided.

According to an embodiment, a wire saw device may be provided, at least temporarily, with a wire spool. For example, the wire spool may be a wire feed spool which provides the required unused wire. As another example, the wire spool may be a wire take-up spool which winds up and stores the used wire. A wire saw device may have one or more wire spools, particularly at least two wire spools, namely at least one feed spool and one take-up spool. For unwinding or winding the wire at the desired wire speed, the feed spool or take-up spool may rotate with a rotation speed of up to several thousand rotations per minute. For example, 1000 to 2000 rpm can be provided for unwinding or winding up the wire.

The region of a wire saw device where the at least one wire spool, such as the at least one feed spool and/or take-up spool, is received is hereinafter referred to as "wire spool zone".

If desired, several high flow-rate nozzles may feed the moving wires with slurry. A"slurry", as understood herein, refers to a liquid carrier with suspended abrasion particles (e.g., particles of silicon carbide).

As mentioned above, during the cutting action, the ingot may be pushed through the wire web. Alternatively, the ingot may be stationary while the wire web is pushed through it. The region where the actual cutting takes place is hereinafter referred to as "cutting zone". The cutting zone may include one or several working areas as described above. According to embodiments, the cutting zone includes at least two wire guides for guiding the wire for cutting.

According to embodiments described herein, the wire is fed from the feed spool and is guided by wire guides. Known wire sawing normally includes settings with preset values for the wire tension entering and exiting the wire web.

In the present disclosure, the tension of the wire, herein referred to also as wire tension, in the cutting zone of the wire saw needs to be set at a certain value in order to ensure efficient cutting with a high throughput and low wire damage. Commercially available wire spools with unused wire provide a wire tension being significantly lower than the wire tension necessary for the cutting action in the cutting zone of the wire saw.

In known wire saws, before using the wire provided on such a conventional spool, the wire has to be unwound from the conventional spool and rewound onto a wire feed spool which is made of a material or is reinforced by a material withstanding the wire tension needed for the cutting action.

After traveling through the cutting zone of the wire saw, the tensioned wire exits the cutting zone and is wound up on a take-up spool. In known wire saws, the take-up spool is usually made of a material or is reinforced by a material withstanding the wire tension of the wire exiting the cutting zone. In known wire saws, after cutting, the used wire is usually unwound from the take-up spool and rewound onto another spool which is then disposed together with the used wire.

The above-described winding and unwinding actions lead to undesired effects with some of them being discussed in the following.

Firstly, the above-described winding and unwinding actions before and after the actual cutting action are additional manufacturing steps which are time-consuming and add up to the actual man-power involved in the overall wafer production.

Secondly, winding the wire on the wire feed spool under tension before cutting may lead to premature damage in the wire due to a high contact pressure of the tensioned wound wire. The so caused defects may lead to saw marks and variation in the wire diameters during cutting. As a result, the cutting quality is decreased.

Thirdly, the wire spools, i.e. the feed spool and the take-up spool, need to be designed for the application of a wire having high tension. A reinforced design may be necessary for the wire spools. Such specially designed spools may increase manufacturing and material costs.

Thus, the present disclosure provides a wire saw device for cutting semiconductor material including a tension modifier converting a first wire tension into a second wire tension. In embodiments, the first wire tension may be higher than the second wire tension. In another embodiment, the first wire tension may be lower than the second wire tension. The first wire tension may be, for instance, the wire tension of the wire entering the tension modifier. Alternatively, the first wire tension may be the wire tension of the wire exiting the tension modifier.

In embodiments, the first wire tension may be the wire tension in the cutting zone and the second wire tension may be the wire tension in the wire spool zone. Alternatively, the first wire tension may be the wire tension in the wire spool zone and the second wire tension may be the wire tension in the cutting zone. The tension modifier may be located between the wire spool zone and the cutting zone.

With a wire saw device according to the present disclosure, it may not be necessary to unwind unused wire from a commercially available wire spool and/or rewind the wire onto a high tension withstanding wire spool. Instead, the conventional wire spool may be directly used as a wire feed spool to feed the wire to the cutting zone. In embodiments described herein, the unused wire on the conventional spool may be fed to the tension modifier. According to embodiments described herein, the tension modifier may receive the wire directly or via one or several wire guides from the conventional wire feed spool.

According to embodiments described herein, the difference between the first wire tension and the second wire tension is at least 5 N, optionally at least 10 N, optionally at least 15 N. According to embodiments described herein, the difference between the first wire tension and the second wire tension is no more than 25 N, optionally no more than 20 N, optionally no more than 15 N.

The first wire tension may be in the range of 1 N and 10 N and the second wire tension may be in the range of 10 N and 35 N. In other embodiments, the second wire tension may be in the range of 1 N and 10 N, and the first wire tension may be in the range of 10 N and 35 N.

According to embodiments described herein, the tension modifier is adapted to convert the wire tension in the cutting zone to at least 10 N, particularly to at least 12 N and more particularly to at least 15 N. As a result, a conventional wire spool, even if it provides a low wire tension, may be used as the feed spool. By converting the low wire tension in the wire spool zone into a higher wire tension in the cutting zone, efficient cutting of semiconductor material may be achieved. In other words, the tension modifier according to embodiments described herein is adapted to convert the wire tension of the wire from the wire spool into a wire tension which is capable for the application in the cutting zone, i.e. for the actual cutting action.

The take-up spool receives and winds up the tensioned used wire from the cutting zone. Having wound up the used wire the take-up spool may be disposed together with the used wire. Advantageously, the take-up spool is made of a cost-effective material. A cost-effective material can be incapable of withstanding a wire having a high wire tension, such as the wire tension in the cutting zone, in particular with tensions resulting from a wire that is, to exemplarily indicate an order of magnitude, 1000 km long and spoiled at a tension of 10 N or more. The tension modifier according to embodiments described herein is adapted to convert the wire tension of the wire in the cutting zone into a wire tension which the take-up spool in the wire spool zone is capable to withstand. According to embodiments described herein, the tension modifier is adapted to convert the wire tension in the wire spool zone to 10 N at maximum, particularly to 8 N at maximum and more particularly to 5 N at maximum.

According to aspects of the present disclosure, the wire tension in the cutting zone is higher than the wire tension in the wire spool zone. In embodiments of the present disclosure, the tension modifier is adapted to increase the first wire tension by, for instance, the values given previously. The first wire tension may be defined as the wire tension of the wire in the wire spool zone. The tension modifier may be adapted to increase the wire tension of the wire in the wire spool zone by, for instance, the values given previously to obtain the second wire tension. In this case, the second wire tension may be the wire tension of the wire in the cutting zone.

Alternatively or additionally, the tension modifier is adapted to reduce the first wire tension by, for instance, the values given previously. In this case, the first wire tension may be defined as the wire tension of the wire in the cutting zone. The tension modifier may be adapted to reduce the wire tension of the wire in the cutting zone to obtain the second wire tension. In this embodiment, the second wire tension may be the wire tension of the wire in the wire spool zone.

The wire saw device according to the present disclosure optimizes the productivity of cutting semiconductor material, such as the overall through-put or the feed rate, by reducing the number of windings and unwindings of the spools (which is an essential factor contributing to the ratio of hours of manpower per wafer cut).

Figs. 1a, 1b and 2 show schematic side views of a wire saw device 100 including a tension modifier 1 according to embodiments. Fig. 2 shows a schematic top view of the wire saw 100 including a tension modifier 1 according to embodiments.

Figs. 1a and 1b show a cutting zone 240 in which the cutting action of the semiconductor material is performed and a wire spool zone 220 in which a wire spool for feeding or taking up a wire is provided.

The wire saw 100 illustrated in Figs. 1a and 1b includes regions defined as wire entrance side 281 and wire exit side 282. The wire entrance side 281 designates the region of the wire saw device from which the wire is fed to the one or multiple working areas. The wire exit side 282 designates the region of the wire saw device where the used wire is received from the one or multiple working areas.

Fig. 1a shows one tension modifier 1 on the wire exit side 282 of the wire saw 100. Fig. 1b shows two tension modifiers 1, a first tension modifier on the wire entrance side 281 and a second on the wire exit side 282. As illustrated in Figs.1a and 1b, the tension modifier 1 may be provided between the wire spool zone 220 and the cutting zone 240.

The wire saw 100 has a wire guide device including four wire guides 112, 114, 116, 118 in the cutting zone 240. The wire guides 112, 114, 116, 118 may be covered with a layer of synthetic resin and may be scored with a plurality of parallel grooves having very precise geometry and size for guiding a wire 230. The distance between the grooves, or the pitch of the grooves, determines the pitch D1 between two adjacent lines of wire 230. Thereby, the pitch is defined as the distance between the center of one groove to the center of an adjacent groove. The pitch D1 minus the wire's diameter sets an upper limit for the thickness of the slices cut by the wire saw.

For example in the event that a third media such as slurry is used, the slices may be about 10 µm to 40 µm thinner than the difference of the pitch D1 minus the wire's diameter. In the wire guides adjacent to the cutting zone, i.e. wire guides 112, 114, 116, 118 in Figs. 1a, 1b, and 2, the pitch D1 between the center of two adjacent grooves may be from 150 µm to 450 µm, optionally in the range of 330 µm to 370 µm. As an example, the grooves may have a pitch D1 of below 300 µm. According to embodiments, which can be combined with the other embodiments described herein, the pitch D1 of the groove results in spacing between adjacent wires of about from 100 µm to 350 µm, optionally 190 µm to 250 µm. In light of the above, embodiments described herein may provide a large cutting area and a high cutting rate.

Furthermore, each wire guide 112, 114, 116, 118 may be connected to a motor or drive. In order to reduce the complexity of the figures, only motor 126 is shown in Fig. 1, and only motors 122 and 124 are shown in Fig. 2. The motors are connected to the respective wire guides. For instance, motor 122 may be connected to the wire guide 112, motor 124 may be connected to the wire guide 114, and motor 126 may be connected to the wire guide 116. Furthermore, the motors 122, 124, 126 may be controlled by a controller via a cable or wireless connection.

According to embodiments, each wire guide is driven by a motor. According to embodiments, each motor may be adapted for performing a back-and-forth movement of the wire. It is also possible that the movement direction of the wire is not altered during sawing as illustrated by the arrows referred to with numbers 215, 225 in Figs. 1a and 1b. In embodiments, as those shown in Figs. 1 and 2, the wire guides 112, 114, 116, 118 each are directly driven by motors. Each wire guide may be directly mounted to a motor shaft of the corresponding motor, such as shafts 121, 123 in Fig. 2. In embodiments described herein, one or more of the motors are water-cooled.

During the cutting action, one or more ingots 302, 304, 306, 308 may be pushed through the wire web in order to slice it. This is indicted by the arrows sandwiched between ingots 302, 304, and 306, 308, respectively. The one or more ingots are supported by a table (not shown) which can be moved with a speed which is called "table speed" herein. Alternatively, the ingots 302, 304, 306, 308 may be stationary while the wire web is pushed through it. According to embodiments, the one or more ingots are sliced into a multitude of wafers, such as at least 500 or even more. Lengths of the ingots are in the range of up to 250 mm, in particular in the case of multi-crystalline Silicon, and up to 500 mm, in particular in case of mono-crystalline Silicon.

Figs. 1a and 1b show a wire feed spool 134 provided with a wire reservoir in the wire spool zone 220. The wire feed spool 134, if still complete, may hold several hundred kilometers of wire 230. During operation of the wire saw, the wire 230 is fed from the wire feed spool 134 to the sawing process, i. e. to the wire guides 112, 114, 116, 118 in the cutting zone 240.

Figs. 1a and 1b show a wire take-up spool 138 in the wire spool zone 220 on which the used wire 230 is recoiled. In the embodiments, the axis of rotation of wire feed spool 134 and take-up spool 138 are parallel to the axes of rotation of the wire guides 112, 114, 116, 118. In other embodiments not illustrated in Figs. 1a and 1b, the axis of rotation of the wire feed spool and the take-up spool are perpendicular to the axis of rotation of the wire guides 112, 114, 116, 118 adjacent to the one or more cutting zones. A deflection pulley or similar device may be provided for feeding the wire to the wire guide. In the present disclosure, further devices such as low inertia pulleys (not shown) may be provided.

In Figs. 1a and 1b the tension modifier 1 is only schematically depicted. Fig. 1a shows one tension modifier 1 on the wire exit side 282. In the example of Fig. 1a, the tension modifier 1 is located between the take-up spool 138 and one of the wire guides of the wire saw, such as wire guide 118. In the configuration illustrated in Fig. 1a, the used wire 230 which has been guided through the wire guides 112, 114, 116, 118 enters the tension modifier 1 and is guided to the take-up spool 138. In other words, the wire 230 may be guided, i.e. transported, from the cutting zone 240 to the tension modifier 1 and further to the wire spool zone 220.

In Fig. 1b, in addition to a tension modifier 1 on the wire exit side 282, a second tension modifier 1 is shown on the wire entrance side 281. As illustrated in Fig. 1b, both tension modifiers 1 are each located between a wire spool zone 220 and the cutting zone 240. In particular, the second tension modifier 1 may be located between the wire feed spool 134 and one of the wire guides of the wire saw, such as wire guide 112. The wire may be guided, i.e. transported, from the wire spool zone 220 to the tension modifier 1 and further to the cutting zone 240.

The top perspective of Fig. 2 shows the tension modifier 1 according to embodiments in a schematic manner on the wire exit side 282.

During operation of the wire saw, one or more motors, such as motor 126, may drive the wire guides 112, 114, 116, 118 so that the wire guides rotate about their longitudinal axis. In those embodiments where the wire is moved in a back-and-forth fashion, the forth movement may take place for a first time interval or a first distance that is equal to or larger than the second time interval or second distance for which the back movement of the wire takes place. In the case of a larger first time interval or first distance, despite an alternating back-and-forth movement of the wire, the wire is slowly transported from the wire feed spool 134 to the wire take-up spool 138.

The wire 230 is wound about the wire guides 112, 114 and 116, 118 and forms layers of parallel wires between the two wire guides. This layer may be referred to as a wire web 200. In the embodiments illustrated, four wire webs may be provided. In other embodiments, two wire webs are provided by use of only two wire guides. Sawing takes place using at least one wire web. In the present disclosure, two wire webs may be used for cutting at the same time (as illustrated in Figs. 1a and 1b). The number of parallel wire portions corresponds to the number of cuts. For instance, the wire may be wound up in such a way that the resulting wire web includes 100 wire portions arranged in parallel. A wafer pushed through this web of 100 wires is sliced into 101 pieces.

In embodiments herein, one of the motors, e.g. motor 126, serves as a master motor whereas the remaining motors connected to the other wire guides 112, 114, 118 serve as slave motors. In other words, master motor 126 may control the operation of the slave motors so that the slave motors follow master motor 126. Thus, synchronicity of operation of the motors provided is improved and can be maintained during the sawing process. It is possible that the assignment of the motors, i.e. which one shall be the master and which ones shall be the slaves, is done dynamically.

According to the present disclosure, the master motor of the wire guides may also control the one or more actuators of the tension modifier as described herein. In particular, according to typical embodiments, the control of the one or motors of the wire guides is synchronized with the one or more tension modifiers.

According to embodiments, which can be combined with other embodiments described herein, two or more spools, i.e. feed spools and/or take-up spools, are provided for forming at least one wire web. For example, two, three or even four spools can be used to provide the wire. Thereby, according to different embodiments, a method of sawing thinner wafers, e.g., in a range of 60 µm to 150 µm can be provided, in particular of between 60 µm and 120 µm. Compared to a single wire system, the load on each wire can be reduced by having two or more spools and, thus, two or more wires. In the present disclosure, for a single wire web the load is increased as compared to a dual wire web due to the increase of the wafer surface area to wire surface area. The increased load can result in lower cutting speeds. Accordingly, using two or more wires can increase the cutting speed, e.g., such that an effective cutting area or a cutting area rate of 12 m²/h or more can be provided.

In the case that several spools are present, there may also be more than one tension modifier, for instance, two or four tension modifiers in one wire saw device. The tension modifiers may be positioned on the wire entrance side 281 and/or on the wire exit side 282. In particular, two tension modifiers may be positioned downstream of and possibly adjacent to the feed spools and two tension modifiers may be positioned upstream of and possibly adjacent to the take-up spools.

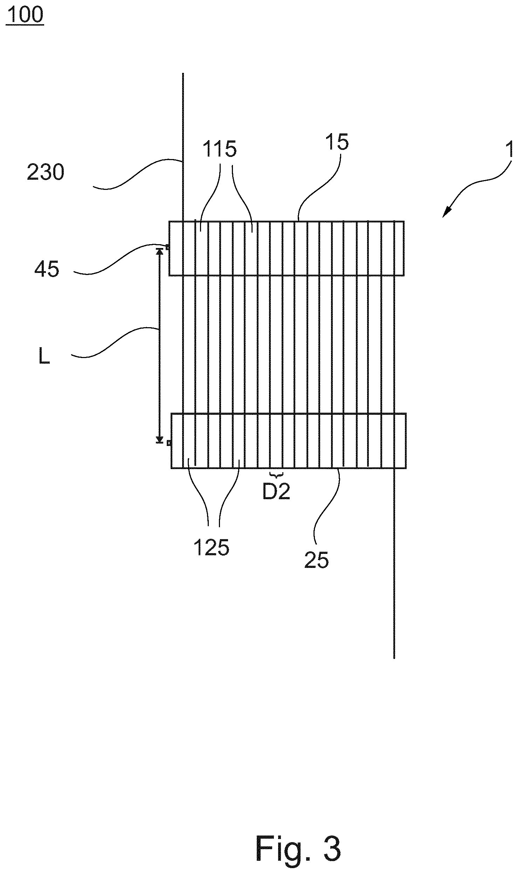

Fig. 3 illustrates the tension modifier 1 with wire 230. It should be noted that wire 230 does not form part of the embodiments of the present disclosure and is only shown in the Figures for a better understanding. The tension modifier includes a first guide roller 15 and a second guide roller 25. The first guide roller 15 includes an axis of rotation 45 and a plurality of grooves 115. The grooves 115 are formed in an outer circumferential surface of the first guide roller 15. The second guide roller 25 also includes a plurality of grooves 125.

The grooves of the guide rollers of the tension modifier are formed in an outer circumferential surface of the first and the second guide roller. As illustrated in Fig. 3, the grooves may be arranged in parallel. Each groove may complete a 360° revolution around the outer circumferential surface of the first guide roller and the second guide roller, respectively.

The pitch D2 of the grooves of the guide rollers of the tension modifier is typically between 1.0 mm and 2.0 mm, but may also be larger, such as more than 5 mm. Notably, contrary to the wire guides as used for forming the wire web (i.e. those adjacent to the cutting zone), the pitch in the tension modifier does not define the thickness of the cut wafers. A larger pitch might consume more space, however, it eases the wire handling on the guide rollers. Each of the guide rollers of the tension modifier may include between 5 and 25 grooves, such as between 10 and 20 grooves.

The grooves 115, 125 are adapted to guide the wire 230. The grooves 115 on the first guide roller 15 and the grooves 125 on the second guide roller 25 may run in parallel to each other. Wire 230 may build several windings around the first guide roller 15 and the second guide roller 25. One winding may be defined by the wire 230 circulating around approximately half of the circumferential surface of the first guide roller 15 and approximately half of the circumferential surface of the second guide roller 25. In other words, the wire 230 is wound around the first guide roller 15 and the second guide roller 25 so that the wire 230 builds a U-shaped loop around each of the first guide roller 15 and the second guide roller 25 with every winding. The grooves 115, 125 of the guide rollers may be distributed approximately equidistantly along the longitudinal direction of the guide rollers 15,25.

According to the invention, the first guide roller 15 has an axis of rotation 45 around which the second guide roller 25 is pivoted. The center of the first guide roller 15 and the center of the second guide roller 25 are spaced apart from each other at a fixed distance L. The fixed distance L forms a connection arm for the second guide roller 25. The fixed distance L is larger than the sum of the radiuses of the first guide roller and the second guide roller. The distance may have a length of between 10 cm and 30 cm, particularly between 15 cm and 25 cm. In particular, the distance may be no larger than 10 cm or even only 5 cm in addition to the sum of the radius of the first guide roller and the second guide roller.

The selection of a distance L that is not extensively large has the effect that the lever of the connection arm and the second guide roller pivoting around the first guide roller does not become too large. However, according to embodiments, it may be taken into account that the length of the distance between the guide rollers has an effect on the angle taken by the wire to pass from a groove to another on the opposite roller guide. The angle is inversely proportional to the length of the connection arm, and is a parameter for the lifetime of the roller guide.

In addition to converting a wire tension the tension modifier 1, described herein and not limited to any specific embodiment, is also designed in such a way that the wire tension may be adjusted. That is, the wire tension may be regulated in order to compensate fluctuations of the wire tension which may occur during the sawing process, such as fluctuations due to the conversion of the wire tension. Adjusting the wire tension may include increasing or decreasing the wire tension of the wire in dependence on the actual needs.

For instance, the tension modifier may be used to convert the wire tension by 10 N. However, in practice, this value may not be constant but may rather vary between 9 N and 11 N in order to compensate fluctuations, oscillations, or inertia. Generally, and not limited to the given example, the desired tension of the conversion may be varied in practice as up to +/-10% or up to 5%. According to embodiments, it is desired to have a constant tension at least within the cutting zone, optionally also in the spooling zone.

The width of the at least one guide roller in the axial direction of the at least one guide roller may be in the range between 3 cm and 30 cm, optionally between 3 cm and 10 cm.

In embodiments described herein, at least one of the first guide roller 15 and the second guide roller 25 may rotate freely on their axis of rotation. Additionally or alternatively, at least one of the first guide roller 15 and the second guide roller 25 may be actuated by an actuator, for example a brushless motor.

An actuator may particularly be provided at the first guide roller that is provided with a stationary axis of rotation. Hence, even in the embodiments where the second guide roller is pivotable about the axis of the first guide roller, the provision of an actuator does not increase the inertia of the moving parts of the tension modifier as it would be the case if an actuator was provided at the second guide roller whose axis of rotation is non-stationary and pivotably around the axis of rotation of the first guide roller in these embodiments. However, the provision of an actuator at the second guide roller, which may be pivotable around the axis of rotation of the first guide roller, shall not be excluded herein.

According to embodiments, one actuator is provided on the connection arm between the first guide roller and the second guide roller. The actuator in this embodiment may cause the actuation of the pivoting movement of the connection arm about the axis of the first guide roller. Not limited to this embodiment, the second guide roller may be non-actuated, for instance, driven by the wire moving the guide roller. Another actuator may be provided to actuate the first guide roller.

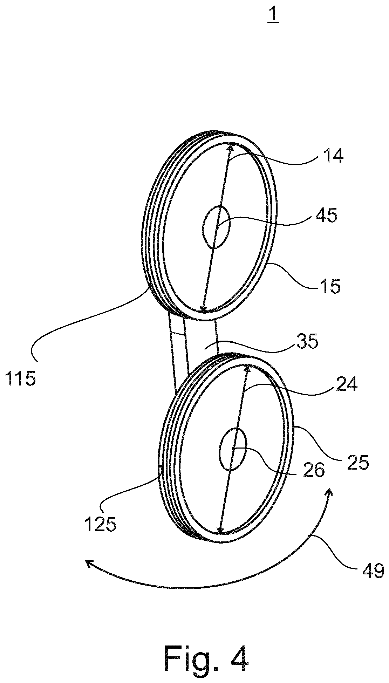

Fig. 4 shows a detailed perspective view of embodiments of a tension modifier 1. In this illustration, the first guide roller 15 is actuated by an actuator 16, such as a brushless modifier. The first guide roller 15 may be actuated by a motor and may rotate around its axis of rotation 45. The second guide roller 25 is not actuated and may freely rotate around an axis of rotation 26. Additionally or alternatively, the second guide roller may be actuated.

Furthermore, as exemplarily illustrated in Fig. 4, the second guide roller 25 may be pivotable around both the axis of rotation 26 of the second guide roller 25 and the axis of rotation 45 of the first guide roller 15. In particular, possibly additionally to the actuation of the first guide roller, an actuator (not shown) may be provided for pivoting the second guide roller 25 around the axis of rotation 45 of the first guide roller 15, as indicated by the doubleheaded arrow 49. Independent of whether the first guide roller and/or the second guide roller is actuated, the maximum angle of the second guide roller pivoting around the axis of rotation of the first guide roller may be +/-35°.

According to embodiments herein, at least one of the first guide roller 15 and the second guide roller 25 has a cylindrically shaped body. The cylindrically shaped body of the at least one of the first guide roller 15 and the second guide roller 25 may have a diameter in the range of between 10 cm and 25 cm, in particular between 12 cm and 20 cm. Fig. 4 illustrates the first guide roller 15 and the second guide roller 25 having both a cylindrically shaped body. In Fig. 4 the diameter of the cylindrically shaped body of the first guide roller 15 is denoted by reference number 14 and the diameter of the cylindrically shaped body of the second guide roller 25 is denoted by reference number 24.

According to embodiments, the shape of the guide rollers may be conical. For instance, the diameter at one side of the first and/or second guide roller may be between 0.5 mm and 10 mm, optionally between 0.5 mm and 4 mm larger than the diameter at the opposite side of the first and/or second guide roller. A conical shape has the effect that slipping of the wire on the surface of the guide rollers may be reduced or avoided, thereby reducing the wear out of the guide rollers. In addition, where there is less or no slipping on the guide rollers, there is also less risk for the wires to jump out of the groove.

According to embodiments herein, at least 5 grooves, particularly at least 10 grooves may be formed in the respective outer circumferential surface of the first guide roller 15 and the second guide roller 25. The first and/or second guide roller has typically no more than 20 grooves. The grooves are arranged parallel to each other. In particular, the grooves in embodiments of the guide rollers of the present disclosure that are exemplarily illustrated by the drawing of Fig. 4 are non-helical.

Fig. 4 shows that the first guide roller 15 and the second guide roller 25 may be connected to each other through an arm 35, particularly by a connection arm. The connection arm 35 forms a fixed distance between the first guide roller 15 and the second guide roller 25. The connection arm 35 serves as a distance keeper between the first guide roller 15 and the second guide roller 25. In embodiments described herein, the connection arm between the first guide roller 15 and the second guide roller 25 may form a pivotable lever arm for adjusting the wire tension. In this case, the second guide roller may pivot around the axis of the first guide roller. The first guide roller may also pivot around the axis of the second guide roller. Through the pivoting movement, tension variations and fluctuations can be cleared.

The wire tension may be adjusted by pivoting the second guide roller 25 together with the connection arm 35 around the axis of rotation 45 of the first guide roller 15. In embodiments, the connection arm 35 may engage at the axis of rotation 45 of the first guide roller 15. By deflecting the connection arm 35, i.e. by pivoting the second guide roller 25 around the axis of rotation 45 of the first guide roller 15, the wire tension of the wire 230 may be adjusted, such as kept constant.

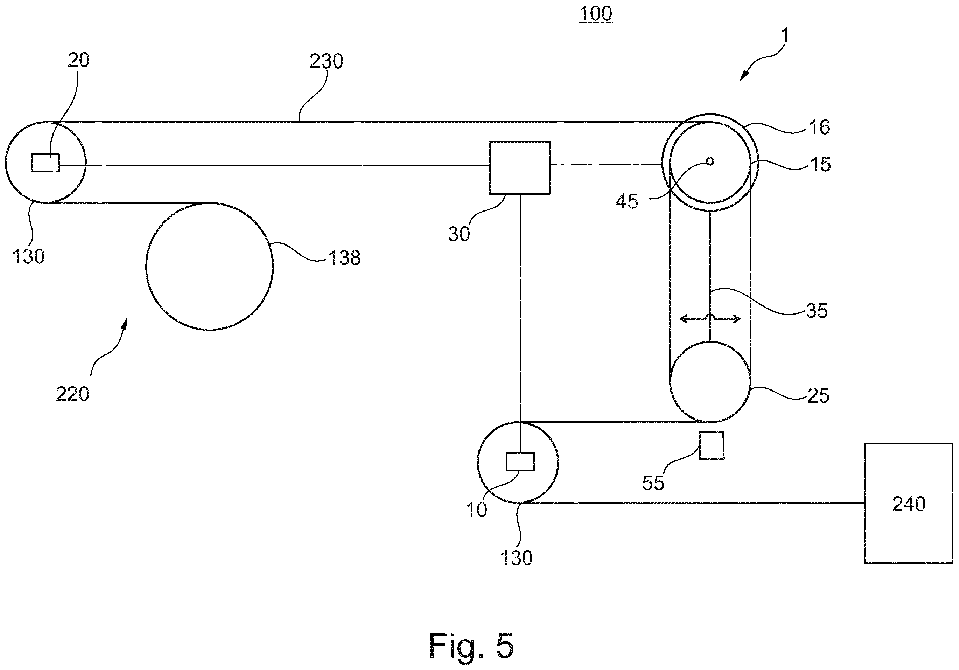

Fig. 5 illustrates the principle of the tension modifier 1 in a wire saw device 100 according to embodiments. The tension modifier may be positioned at different locations in or adjacent or attached to the wire saw device. The process of converting a first wire tension into a second wire tension is not affected by the location of the tension modifier.

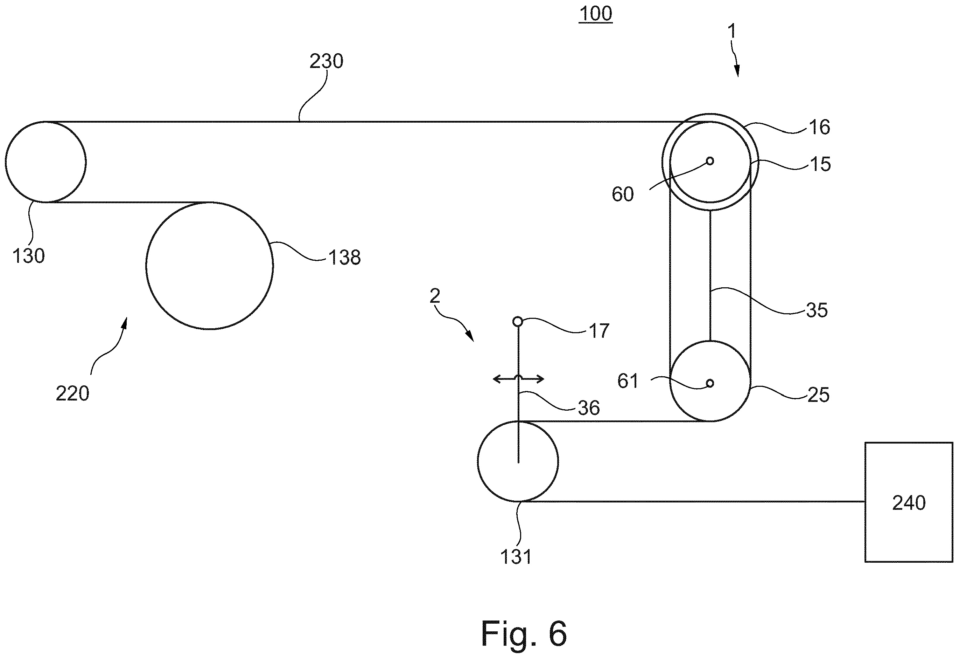

Fig. 5 exemplarily shows a configuration of the wire saw device 100 according to embodiments. In this illustration, the tension modifier 1 is positioned between the take-up spool 138 and wire guide 118. The first wire tension represents the wire tension in the cutting zone 240. The second wire tension represents the wire tension in the wire spool zone 220. The tension modifier 1 is adapted to convert the wire tension of the wire in the cutting zone 240 so that the wire tension of the wire 230 in the wire spool zone 220 is smaller than the wire tension of the wire 230 in the cutting zone 240. The cutting zone 240 is only schematically depicted in Figs. 5 and 6. The cutting zone 240 may particularly include a plurality of guide rollers adapted to span a wire web therebetween for sawing a semiconductor ingot. For more details, it is referred to the exemplary embodiments of Figs. 1, 2a and 2b.

According to another embodiment (not shown), the tension modifier 1 may be positioned on the wire entrance side 281. In this case, the tension modifier 1 may be adapted to convert the wire tension of the wire in the cutting zone so that the wire tension of the wire in the cutting zone is higher than the wire tension of the wire in the wire spool zone.

According to embodiments, the cutting zone 240 may be a high tension zone in which the wire tension of the wire 230 is at least 15 N, particularly at least 20 N, more particularly 25 N. The wire spool zone 220 may, for example, be a low tension zone in which the wire tension of the wire 230 is at most 10 N, particularly at most 8 N, more particularly at most 5 N.

By circulation of the wire several times between the first guide roller and the second guide roller, the tension modifier is adapted to allow an amendment of the wire tension, when the wire is exiting the tension modifier, as compared to the wire tension of the wire entering the tension modifier.

According to embodiments herein, the wire 230 may be wound at least 2 times around the first guide roller 15 and the second guide roller 25, particularly at least 5 times or 8 times. In embodiments, the wire is wound around the first and the second guide roller at most 30 or even at most 25 times. In embodiments, the wire may be wound around the first guide roller 15 and the second guide roller 25 less than 20, particularly less than 15 times.

In addition to the adaption to convert the wire tension, the tension modifier 1 is also designed in such a way that the wire tension in the cutting zone 240 can be adjusted during operation. The wire tension in the cutting zone 240 may be regulated by rotating the first guide roller 15 together with the connection arm 35 around the axis of rotation 45 of the second guide roller 25. In embodiments, the connection arm 35 may engage at the axis of rotation 45 of the second guide roller 25. The distance between the first guide roller 15 and the second guide roller 25 may be determined by the length of the connection arm 35. Efficient adjusting may be obtained by guiding the wire into the first guide roller 15 so that the direction in which the wire is entering the first guide roller 15 is perpendicular to the connection arm 35. Additionally or alternatively, the wire exiting the first guide roller 15 may be guided so that the direction in which the wire is exiting the first guide roller 15 is perpendicular to the connection arm 35. The connecting arm can thus also be considered as pendulum arm in various embodiments disclosed herein.

According to embodiments, the wire saw device 100 may include a sensing device for measuring at least one of the first wire tension and the second wire tension. Additionally or alternatively, a position sensor may be provided for measuring the position and/or deflection of the second guide roller. Such a position sensor is exemplarily shown in Fig. 5 and denoted with reference number 55.

Furthermore, Fig. 5 shows a sensing device 20 being arranged in the wire spool zone 220 between the tension modifier 1 and the take-up spool 138. Another sensing device 10 is arranged between the guide roller 118 and the tension modifier 1. The provision of a sensing device is not limited to the embodiment of Fig. 5 but applicable to all embodiments covered herein.

In embodiments, the sensing device 10 may be adapted for measuring the wire tension of the wire 230 before or upon entering the tension modifier 1 and sensing device 20 is adapted for measuring the wire tension of the wire 230 upon or after exiting the tension modifier 1. Sensing devices 10, 20 may be disposed at a wire guide 130 guiding the wire 230. Sensing devices 10, 20 may include a force sensor for measuring the actual wire tension. For example, the speed of at least one of the first guide roller 15 and the second guide roller 25 may be adapted to the wire tension measured by the sensing device 10 and/or sensing device 20. Additionally or alternatively, the speed of an actuated wire guide, such as wire guide 118 in Fig. 5, may be adapted to the wire tension measured by the sensing device 10. Additionally or alternatively, the speed of the take-up spool 138 may be adapted to the wire tension measured by the sensing device 20.

According to embodiments, the wire saw device 100 may include a controller 30 for controlling the tension modifier 1 based on the measured wire tension data. The sensing devices 10, 20, if any, and/or the position sensor 55, if any, may be connected to the controller 30 via a cable or wireless. The data measured by at least one of the sensing devices 10, 20 and/or the position sensor may be fed back to the controller 30. Based on the measured data, the controller 30 may evaluate and calculate several parameters of the tension modifier 1 and control and regulate the tension modifier 1 accordingly.

According to embodiments, another sensing device may be disposed at the tension modifier 1, particularly at the connection arm 35, for controlling and regulating the wire tension in the cutting zone 240. The actual torque of the connection arm 35 and the torque needed for a specific wire tension may be determined. Accordingly, the speed of an actuated wire guide, such as wire guide 118 in Fig. 5, and the guide rollers 15 and 25 may be adjusted. The connection arm 35 may be actuated by an actuator, such as actuator 16 in Fig. 5. Generally herein, each actuator described may be, for instance, an electric motor, such as a brushless motor, a servo motor, or a pneumatic motor. In particular, a linear actuator in combination with kinematic transformation into rotational movement may be employed.

The controller of the present disclosure may be provided, in embodiments, with a health monitoring typically employing model-based algorithms. The health monitoring may be used to check the plausibility of the data received from the sensing device and/or the position sensor. In case of a failure of one or more of the sensor devices, in particular the sensor device located on the high tension side, the controller may continue to operate based on estimates instead of the measured data. Furthermore, to check the operability of the actuators, a warning message can be triggered if the disturbances in the torque exceeds a selectable threshold value.

Fig. 6 shows an example not according to the invention of the present disclosure. The wire saw device is provided with the tension modifier 1. The tension modifier 1 is provided with a first guide roller 15 and a second guide roller 25. The first guide roller 15 is connected to the second guide roller 25 via a connection arm 35. In the example depicted in Fig. 6, the second guide roller is not pivotable around the first guide roller. This may also be called "stiff connection" of the tension modifier herein.

The difference to the embodiments illustrated in Fig. 5 is highlighted. The tension modifier 1 in the embodiments of Fig. 5 is provided with an axis of rotation 45 in the first guide roller 15. The axis of rotation 45 corresponds also to the axis that the second guide roller 25 pivots around the first guide roller 15. Instead, in the example of Fig. 6, reference number 60 refers to the axis of the first guide roller 15 and reference number 61 refers to the axis of the second guide roller. However, in this example illustrated in Fig. 6, it is not provided that the second guide roller rotates about the axis of the first guide roller or that the first guide roller rotates about the axis of the second guide roller. In particular, the axis 60 of the first guide roller 15 and the axis 61 of the second guide roller 25 may both be fixed in their position.

According to embodiments, the tension modifier includes one, optionally two guide rollers that each may be provided with a conically shaped body as described with respect to other embodiments herein. In particular, both the first guide roller and the second guide roller, as described in various embodiments herein, may be provided with a conically shaped body.

In addition, in embodiments employing a stiff connection between the first guide roller and the second guide roller, it is typical that a tension adjuster is provided. For instance, as depicted in the example of Fig. 6, a tension adjuster 2 may be provided in the wire saw device, in particular between the tension modifier 1 and the cutting zone 240. The tension adjuster is configured to adjust the tension, in particular, to keep the tension as constant as possible for the cutting process in the cutting zone 240. This enhances the accuracy of the tension regulation in the cutting zone.

In further embodiments not specifically illustrated, the tension adjuster may be provided between the spool zone 220 and the tension modifier 1. In still further embodiments, a tension adjuster 2 may be provided both between the tension modifier 1 and the cutting zone 240, and a further tension modifier may be provided between the spool zone 220 and the tension modifier 1.

As illustrated in Fig. 6, the tension adjuster may be provided with a center 17 of pivoting. An arm 36 is provided for a guide roller 131 to pivot about. The guide roller 131 may pivot passively, i.e. dependent on the tension difference of the wire at both sides of the guide roller. Alternatively, an actuator may be provided that actively controls the pivot movement of the guide roller 131 about the center 17 of pivoting.

The peripheral grooves of the tension converting roller are typically arranged in parallel. Also, the number of grooves on the second guide roller and the number of grooves on the first guide roller is typically identical.

The tension modifier according to embodiments described herein is adapted to convert wire tensions across orders of magnitude. Converting may be defined as increasing or reducing the wire tension. The wire tension of the wire entering the tension modifier may be lower or higher than the wire tension of the wire exiting the tension modifier by orders of magnitude. The difference of the wire tension entering the tension modifier and exiting the tension modifier is determined by the number of windings on the guide rollers of the tension modifier.

The wire tension of a wire which is guided in the windings of the tension modifier is progressively increased or reduced with each subsequent winding of the guide rollers that the wire passes. According to embodiments, without limitation to the example of Fig. 6, at least one of a guide roller upstream or a guide roller downstream is provided with an actuator. In some embodiments, both the guide roller upstream and the guide roller downstream are provided with an actuator.

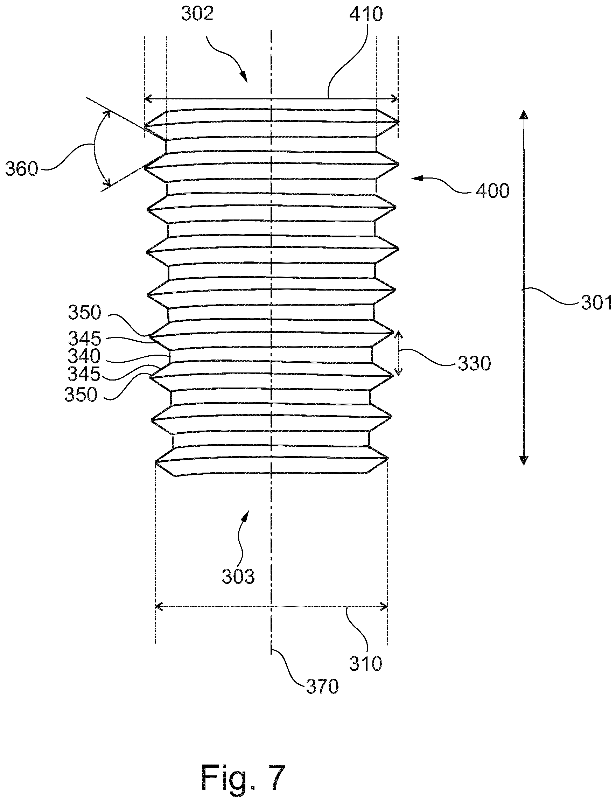

Fig. 7 exemplarily illustrates a detailed view of a guide roller as described herein, in particular, of the first guide roller 15 and or the second guide roller 25 as described in the embodiments illustrated in the figures. Fig. 7 is not true to scale but shall particularly allow insights into the groove structure. Fig. 7 shows a guide roller which is rotatable around an axis of rotation 370. The guide roller is provided with a plurality of peripheral grooves 400 for receiving a wire. For instance, the grooves 400 may correspond to the grooves 115 and/or 125 as described previously. The peripheral grooves 400 wind around the conically shaped body of the guide roller. In embodiments described herein, the peripheral grooves 400 include at least 2 windings, particularly at least 5 windings. Typically, the guide roller includes less than 30 windings, in particular less than 20 windings.

Each winding is formed by a root 340, two crests 350 and two flanks 345. The two flanks make an angle ε which is denoted by 360 herein. According to embodiments, each winding of the peripheral groove 400 has a width in a cross direction of the conically shaped body, a depth in a radial direction of the conically shaped body and a pitch 330 from the center of one winding to the center of an adjacent winding. The width may be determined by the distance between two adjacent crests 350 surrounding a winding.

Particularly, the width of the windings may be in the range of 100 µm to 500 µm. The depth may be determined by the distance between one of the crests 350 and the root 340 of a winding. Particularly, the depth of the windings may be in the range of 100 µm to 500 µm. The pitch 330 may be determined by the distance between the center of one winding to the center of an adjacent winding. Particularly, the pitch may be in the range of between 1 mm to 5 mm.

According to embodiments described herein, the width of the guide roller in an axial direction, which is denoted by 301 in Fig. 7, is between 1 cm and 20 cm, particularly between 3 cm and 10 cm.

According to embodiments, the guide roller, be it the first guide roller and/or the second guide roller of the tension modifier, has a first diameter on a first axial end and a second diameter on a second axial end, the first diameter being larger than the second diameter by at least 1 mm, optionally by at least 2 mm or even 5 mm. The first diameter may be larger than the second diameter by less than 10 mm. The first diameter and/or the second diameter may be at least 10 cm. The relative difference in the diameters, i.e. the difference in diameters in relation to the larger one of the first or second diameter is typically at or below 1%. Having differing diameters on each end, not limited to the values exemplarily given in the previous sentence, the guide roller has a conical shape. Accordingly, the body of the converting roller may be defined designated as a conically shaped body.

According to embodiments, the first diameter, the second diameter or the average value of the first diameter and the second diameter of the guide roller is at least two times, typically at least three times as large as the width of the guide roller in the axial direction illustrated by the arrow 301 in Fig. 7.

Fig. 7 exemplarily shows the tension guide roller with a first end 302 and a second end 303 located opposite each other. The first end 302 has a diameter 410 which is determined by the diameter confined by the crest 350 of the first winding on the first end 302. The second end 303 may have a diameter 310 which is determined by the diameter confined by the crest 350 of the first winding on the second end 303. The diameters may be in the range of between 5 cm and 30 cm, in particular between 10 cm and 20 cm.

According to embodiments, the diameter 410 on the first end 302 may be larger than the diameter 310 on the second end 303 by a factor of at least 1.001. Additionally or alternatively, the diameter 410 on the first end 302 may be larger than the diameter 310 on the second end 303 by a factor of at most 1.1.

In embodiments described herein, the diameter increases constantly in the longitudinal direction 301 of the conically shaped body from the first end 302 to the second end 303 of the guide roller. The diameter which progressively increases from the first end 302 to the second end 303 compensates for a wire elongation from the first end 302 to the second end 303 due to the difference in the wire tension. Such a wire elongation occurs, for example, with a wire saw device as described above in which a wire tension is converted from a lower tension zone into a higher tension zone or vice versa. The extent to which a wire may be elongated due to the wire tension is dependent on the wire material and the diameter.

In another embodiment, the diameter may increase inconstantly in a longitudinal direction of the conically shaped body from the first end 302 to the second end 303. For example, the increase of the diameter may be realized in individual stages.

## Claims

1. A wire saw device (100) for cutting semiconductor material, comprising:
a tension modifier (1) adapted to convert a first wire tension into a second wire tension, including
a first guide roller (15) including an axis of rotation (45) and a plurality of grooves (115) being formed in an outer circumferential surface of the first guide roller (15), and
a second guide roller (25) including a plurality of grooves (125) being formed in an outer circumferential surface of the second guide roller (25), wherein the first guide roller (15) and the second guide roller (25) are spaced apart from each other at a fixed distance (L) **characterized in that** the second guide roller (25) is pivotable around the axis of rotation (45) of the first guide roller (15).

2. The wire saw device according to claim 1, , wherein the first guide roller (15) and the second guide roller (25) are connected through a connection arm (35).

3. The wire saw device according to claim 2, wherein
the axis of the first guide roller and the axis of the second guide roller are fixed in position.

4. The wire saw device according to any of the preceding claims , wherein
the difference between the first wire tension and the second wire tension is at least 5N, optionally at least 10 N, optionally at least 15 N.

5. The wire saw device according to any of the preceding claims, wherein
at least one of the first guide roller (15) and the second guide roller (25) have a cylindrically shaped body optionally with a diameter (14, 24) in the range of 10 cm and 25 cm, optionally between 15 cm and 20 cm.

6. The wire saw device according to any of the preceding claims, wherein
at least one of the first guide roller (15) and the second guide roller (25) is actuated by an actuator (16).

7. The wire saw device according to any of the preceding claims, further comprising at least one of a sensing device (10, 20) for measuring at least one of the first wire tension or the second wire tension, and a position sensor for measuring the position of the second guide roller (25).

8. The wire saw device according to claim 7, further comprising
a controller (30) for controlling the tension modifier (1) based on the measured wire tension data.

9. The wire saw device according to any of the preceding claims, wherein
the plurality of grooves includes at most 30 grooves.

10. The wire saw device according to any of the preceding claims, wherein
the grooves have
a pitch from the center of one groove to the center of an adjacent groove in the range of between 1 mm to 5 mm.

11. The wire saw device according to any of the preceding claims, wherein at least one of
the first wire tension is in the range of up to 10 N and the second wire tension is in the range of at least 15 N; and
the second wire tension is in the range of up to 10 N and the first wire tension is in the range of at least 15 N.

12. The wire saw device according to any of the preceding claims, wherein at least one of the first guide roller (15) and the second guide roller (25) have a conically shaped body, wherein preferably both of the first guide roller and the second guide roller have a conically shaped body.

13. The wire saw device according to any of the preceding claims, wherein
at least one of the first guide roller and the second guide roller has a first diameter (410,420) on a first end (302) and a second diameter (310,320) on a second end (303), the first diameter (410,420) being larger than the second diameter (310,320) by at least 1 mm, optionally by at least 2 mm.

14. The wire saw device according to claim 13, wherein
the diameter increases constantly in a longitudinal direction of the conically shaped body from the first end (302) to the second end (303).

15. The wire saw device according to any of the preceding claims, wherein
at least one of the grooves (115) of the first guide roller (15) and the grooves (125) of the second guide roller (25) are arranged in parallel with the number of grooves (115,125) in at least one of the first guide roller (15) and the second guide roller (25) preferably being at most 30 windings.

## Patentansprüche

1. Drahtsägenvorrichtung (100) zum Schneiden von Halbleitermaterial, umfassend:
eine Spannungsmodifiziereinrichtung (1), die zum Übersetzen einer ersten Drahtspannung in eine zweite Drahtspannung ausgebildet ist und Folgendes aufweist:
eine erste Führungsrolle (15) mit einer Drehachse (45) und einer Vielzahl von in einer Außenumfangsfläche der ersten Führungsrolle (15) ausgebildeten Nuten (115) und
eine zweite Führungsrolle (25) mit einer Vielzahl von in einer Außenumfangsfläche der zweiten Führungsrolle (25) ausgebildeten Nuten (125), wobei die erste Führungsrolle (15) und die zweite Führungsrolle (25) mit einem festen Abstand (L) voneinander beabstandet sind,
**dadurch gekennzeichnet,**
**dass** die zweite Führungsrolle (25) um die Drehachse (45) der ersten Führungsrolle (15) schwenkbar ist.

2. Drahtsägenvorrichtung nach Anspruch 1, wobei
die erste Führungsrolle (15) und die zweite Führungsrolle (25) durch einen Verbindungsarm (35) miteinander verbunden sind.

3. Drahtsägenvorrichtung nach Anspruch 2, wobei
die Achse der ersten Führungsrolle und die Achse der zweiten Führungsrolle ortsfest sind.

4. Drahtsägenvorrichtung nach einem der vorhergehenden Ansprüche, wobei der Unterschied zwischen der ersten Drahtspannung und der zweiten Drahtspannung mindestens 5 N, wahlweise mindestens 10 N und wahlweise mindestens 15 N beträgt.

5. Drahtsägenvorrichtung nach einem der vorhergehenden Ansprüche, wobei die erste Führungsrolle (15) und/oder die zweite Führungsrolle (25) einen zylinderförmigen Körper mit wahlweise einem Durchmesser (14, 24) in dem Bereich von 10 cm und 25 cm, wahlweise zwischen 15 cm und 20 cm, aufweist/aufweisen.

6. Drahtsägenvorrichtung nach einem der vorhergehenden Ansprüche, wobei die erste Führungsrolle (15) und/oder die zweite Führungsrolle (25) durch ein Stellglied (16) betätigbar ist/sind.

7. Drahtsägenvorrichtung nach einem der vorhergehenden Ansprüche, des Weiteren umfassend
eine Sensorvorrichtung (10, 20) zum Messen der ersten Drahtspannung und/oder der zweiten Drahtspannung und/oder einen Positionssensor zum Messen der Position der zweiten Führungsrolle (25).

8. Drahtsägenvorrichtung nach Anspruch 7, des Weiteren umfassend eine Regeleinrichtung (30) zum Regeln der Spannungsmodifiziereinrichtung (1) auf Basis der gemessenen Drahtspannungsdaten.

9. Drahtsägenvorrichtung nach einem der vorhergehenden Ansprüche, wobei die Vielzahl von Nuten maximal 30 Nuten umfasst.

10. Drahtsägenvorrichtung nach einem der vorhergehenden Ansprüche, wobei die Nuten einen Abstand im Bereich von 1 mm bis 5 mm zwischen der Mitte einer Nut und der Mitte einer angrenzenden Nut aufweisen.

11. Drahtsägenvorrichtung nach einem der vorhergehenden Ansprüche, wobei die erste Drahtspannung im Bereich von bis zu 10 N und die zweite Drahtspannung im Bereich von mindestens 15 N liegt; und/oder
die zweite Drahtspannung im Bereich von bis zu 10 N und die erste Drahtspannung im Bereich von mindestens 15 N liegt.

12. Drahtsägenvorrichtung nach einem der vorhergehenden Ansprüche, wobei die erste Führungsrolle (15) und/oder die zweite Führungsrolle (25) einen kegelförmigen Körper aufweist/aufweisen, wobei vorzugsweise sowohl die erste Führungsrolle als auch die zweite Führungsrolle einen kegelförmigen Körper aufweisen.

13. Drahtsägenvorrichtung nach einem der vorhergehenden Ansprüche, wobei die erste Führungsrolle und/oder die zweite Führungsrolle einen ersten Durchmesser (410, 420) an einem ersten Ende (302) und einen zweiten Durchmesser (310, 320) an einem zweiten Ende (303) aufweist/aufweisen, wobei der erste Durchmesser (410, 420) um mindestens 1 mm, wahlweise um mindestens 2 mm größer ist als der zweite Durchmesser (310, 320).

14. Drahtsägenvorrichtung nach Anspruch 13, wobei
der Durchmesser in einer Längsrichtung des kegelförmigen Körpers von dem ersten Ende (302) zu dem zweiten Ende (303) kontinuierlich zunimmt.

15. Drahtsägenvorrichtung nach einem der vorhergehenden Ansprüche, wobei die Nuten (115) der ersten Führungsrolle (15) und/oder die Nuten (125) der zweiten Führungsrolle (25) parallel angeordnet sind, wobei die Anzahl der Nuten (115, 125) in der ersten Führungsrolle (15) und/oder der zweiten Führungsrolle (25) vorzugsweise maximal 30 Windungen beträgt.

## Revendications

1. Dispositif de scie à fil (100) pour couper du matériau semi-conducteur, comprenant:
un modificateur de tension (1) apte à convertir une première tension de fil en une deuxième tension de fil, comportant
un premier galet de guidage (15) ayant un axe de rotation (45) et une pluralité de rainures (115) étant formées dans une face extérieure circonférentielle du premier galet de guidage (15), et
un deuxième galet de guidage (25) ayant une pluralité de rainures (125) étant formées dans une face extérieure circonférentielle du deuxième galet de guidage (25), dans lequel
le premier galet de guidage (15) et le deuxième galet de guidage (25) sont espacés l'un de l'autre d'une distance (L) fixe,
**caractérisé en ce que**
le deuxième galet de guidage (25) est pivotable autour de l'axe de rotation (45) du premier galet de guidage (15)

2. Dispositif de scie à fil selon la revendication 1, dans lequel
le premier galet de guidage (15) et le deuxième galet de guidage (25) sont reliés par un bras de liaison (35).

3. Dispositif de scie à fil selon la revendication 2, dans lequel
l'axe du premier galet de guidage et l'axe du deuxième galet de guidage sont fixés en position.

4. Dispositif de scie à fil selon l'une quelconque des revendications précédentes, dans lequel
la différence entre la première tension de fil et la deuxième tension de fil est au moins 5 N, facultativement au moins 10 N, facultativement au moins 15 N.

5. Dispositif de scie à fil selon l'une quelconque des revendications précédentes, dans lequel
au moins un parmi le premier galet de guidage (15) et le deuxième galet de guidage (25) a un corps en forme cylindrique présentant facultativement un diamètre (14, 24) dans la gamme de 10 cm et 25 cm, facultativement entre 15 cm et 20 cm.

6. Dispositif de scie à fil selon l'une quelconque des revendications précédentes, dans lequel
au moins un parmi le premier galet de guidage (15) et le deuxième galet de guidage (25) est actionné par un actionneur (16).

7. Dispositif de scie à fil selon l'une quelconque des revendications précédentes, comprenant en outre
au moins un parmi un dispositif sensoriel (10, 20) destiné à mesurer au moins un parmi la première tension de fil ou la deuxième tension de fil, et un capteur de position destiné à mesurer la position du deuxième galet de guidage (25).

8. Dispositif de scie à fil selon la revendication 7, comprenant en outre
un régulateur (30) destiné à régler le modificateur de tension (1) sur la base des données de tension de fil mesurées.

9. Dispositif de scie à fil selon l'une quelconque des revendications précédentes, dans lequel
la pluralité de rainures comprend 30 rainures au maximum.

10. Dispositif de scie à fil selon l'une quelconque des revendications précédentes, dans lequel
les rainures présentent un pas dans la gamme comprise entre 1 mm à 5 mm à partir du centre d'une rainure au centre d'une rainure adjacente.

11. Dispositif de scie à fil selon l'une quelconque des revendications précédentes, dans lequel au moins un parmi
la première tension de fil est dans la gamme allant jusqu'à 10 N et la deuxième tension de fil est dans la gamme d'au moins 15 N ; et
la deuxième tension de fil est dans la gamme allant jusqu'à 10 N et la première tension de fil est dan la gamme d'au moins 15 N.

12. Dispositif de scie à fil selon l'une quelconque des revendications précédentes, dans lequel au moins un parmi le premier galet de guidage (15) et le deuxième galet de guidage (25) a un corps en forme conique, dans lequel, de préférence, le premier galet de guidage ainsi que le deuxième galet de guidage ont un corps en forme conique.

13. Dispositif de scie à fil selon l'une quelconque des revendications précédentes, dans lequel
au moins un parmi le premier galet de guidage et le deuxième galet de guidage a un premier diamètre (410, 420) à une première extrémité (302) et un deuxième diamètre (310, 320) à une deuxième extrémité (303), le premier diamètre (410, 420) étant supérieur au deuxième diamètre (310, 320) d'au moins 1 mm, facultativement d'au moins 2 mm.

14. Dispositif de scie à fil selon la revendication 13, dans lequel
le diamètre augmente de manière constante dans une direction longitudinale du corps en forme conique à partir de la première extrémité (302) vers la deuxième extrémité (303).

15. Dispositif de scie à fil selon l'une quelconque des revendications précédentes, dans lequel
au moins unes parmi les rainures (115) du premier galet de guidage (15) et les rainures (125) du deuxième galet de guidage (25) sont disposées en parallèle, le nombre de rainures (115, 125) dans au moins un parmi le premier galet de guidage (15) et le deuxième galet de guidage (25) étant, de préférence, 30 filets au maximum.
